# EUROPÄISCHE PATENTSCHRIFT

(11) **EP 1 330 774 B1**
(45) Veröffentlichungstag und Bekanntmachung des Hinweises auf die Patenterteilung: **22.12.2004**
(21) Anmeldenummer: 01992976.9
(22) Anmeldetag: 29.10.2001
(51) Int. Cl.: G06K 9/00, G06K 9/38

(54) **VERFAHREN ZUR OPTIMIERUNG EINES ELEKTRONISCH ERZEUGTEN BILDES**
METHOD FOR OPTIMIZING AN ELECTRONICALLY PRODUCED IMAGE
PROCEDE PERMETTANT D'OPTIMISER UNE IMAGE PRODUITE ELECTRONIQUEMENT

(30) Priorität: 02.11.2000 DE 10054185
(43) Veröffentlichungstag der Anmeldung: 30.07.2003
(73) Patentinhaber: Infineon Technologies AG, 81669 München (DE)
(72) Erfinder: ENGELS, Angela, 82515 Wolfratshausen (DE)
(74) Vertreter: Epping Hermann & Fischer
(86) Internationale Anmeldenummer: PCT/DE2001/004090
(87) Internationale Veröffentlichungsnummer: WO 2002/037400

(56) Entgegenhaltungen:
- EP-A- 0 797 170
- DE-A- 4 138 663
- US-A- 5 917 928
- US-A- 6 005 963

## Beschreibung

Die vorliegende Erfindung betrifft ein Verfahren, mit dem ein von einem elektronischen Sensor, insbesondere einem Fingerabdrucksensor, erzeugtes Bild in seinen Grauwertabstufungen optimiert werden kann.

Bei kapazitiv arbeitenden Sensoren zur Bilderfassung befindet sich an einer Sensorfläche eine rasterförmige Anordnung von Leiterflächen, die die einzelnen Sensorelemente bilden. Die von dem Sensor erreichte Abbildungsqualität, insbesondere Kontrast und Helligkeit, ist abhängig davon, wie gut die Verbindung zu dem die gemessenen Kapazitätsänderungen hervorrufenden Bild ist, insbesondere bei einem hier hauptsächlich interessierenden Fingerabdrucksensor, wie fest eine Fingerkuppe auf die Auflagefläche des Fingerabdrucksensors aufgelegt wird. Wird der Finger nur leicht aufgelegt, so ergibt sich ein Fingerabdruckbild mit kleiner Fläche und nur geringen dunklen Grauanteilen. Wird der Finger fest auf den Sensor gedrückt, dann vergrößert sich die Fläche des Fingerabdruckbildes, und die Grauanteile im Bild verschieben sich zu dunkleren Werten hin. Ein entsprechender und im Allgemeinen sogar deutlicher erkennbar auftretender Effekt wird durch die vom Finger abgegebene Feuchtigkeit hervorgerufen: bei hoher Feuchtigkeit entsteht ein dunkleres Bild; bei niedriger Feuchtigkeit entsteht ein helleres Bild.

Ein Fingerabdruckbild kann störende Anteile enthalten, die für sich allein nicht in Erscheinung treten, aber in Verbindung mit den durch das angekoppelte Bild verursachten Kapazitätsänderungen die Wiedergabe des aktuell erfassten Bildes verfälschen. Diese störenden Anteile können von Verschmutzungen oder Beschädigungen der Auflagefläche herrühren und sind in der Regel so schwach, dass sie nicht als eigenständiges Bild erfasst werden können. In denjenigen Fällen, in denen die störenden Anteile als eigenständiges Bild erfasst werden können, kann es vorkommen, dass eine einfache Subtraktion des Störanteiles zu einer Abschwächung oder sogar Unterbrechung der wiedergegebenen Fingerlinien in denjenigen Bildpunkten führt, in denen das Fingerabdruckbild und die Störanteile einander überschneiden.

Kapazitiv messende Fingerabdrucksensoren sind Bestandteile biometrischer Identifikationssysteme zur Personenerkennung oder zur Verifizierung einer Zugangsberechtigung, bei denen mit elektronischen Mitteln ein Fingerabdruck aufgenommen und dessen wesentliche Ausprägungen mit abgespeicherten Referenzdaten verglichen werden. Referenzdaten sind insbesondere die sogenannten Minutien, die die relevanten Punkte des Fingerabdrucks darstellen. Diese Punkte sind besonders die Verzweigungsstellen der Furchen und Stege der Hautoberfläche. Es ist denkbar, dass die Rückstände, die nach dem Auflegen eines Fingers auf der Auflagefläche bleiben und zur Reproduktion der Minutien möglicherweise ausreichen, erneut zur Aufnahme des Fingerabdruckes verwendet werden. Eine weitere Schwierigkeit besteht darin, dass die erwähnten Rückstände oder verschiedene andere Arten von Verschmutzungen der für den Finger vorgesehenen Auflagefläche ein verfälschtes Fingerabdruckbild oder eine zu große Zahl an Minutien liefern.

Für eine zuverlässige Personenzuordnung ist sicherzustellen, dass auf dem Sensor verbliebene Rückstände derselben oder anderer Personen durch frühere Benutzung des Sensors nicht zur Verhinderung einer akkuraten Erkennung bei der aktuellen Benutzung führen. Für eine einwandfreie biometrische Fingerabdruckserkennung ist zu garantieren, dass die Bilddaten, die von einem auf dem Sensor aufliegenden Finger erfasst werden, nicht durch Schmutz oder anderweitige Rückstände auf dem Sensor verfälscht werden. Eine schmutzabweisende Ausgestaltung der Sensoroberfläche schafft für dieses Problem keine ausreichende Abhilfe.

In der DE 195 36 170 A1 ist ein Verfahren zur Ermittlung von Schwellwerten bei der Digitalisierung von Bildern durch eine Verteilungsanalyse der Informationen beschrieben, bei dem die lokale Verteilungsdichte dunkler Bildpunkte oder die Grauwertverteilung innerhalb einzelner Bereiche analysiert wird, um bereichsweise angewandte Schwellwerte für eine Digitalisierung des Bildes zu ermitteln.

In Rafael C. Gonzales und Richard E. Woods: "Digital Image Processing", Addison-Wesley Publishing Company 1992, Seiten 443 und 444, ist in dem Abschnitt 7.3 Thresholding beschrieben, wie eine Bildsegmentierung unter Einsatz von Schwellwerten vorgenommen werden kann. Es werden auch Mehrfachschwellen angegeben sowie ortsabhängige, "lokale" und "dynamische" Schwellwerte.

In der US 5,917,928 ist ein Filterverfahren beschrieben, bei dem das Bild durch ein gleitendes Fenster in eine Mehrzahl verschiedener Ausschnitte unterteilt wird. In jedem dieser Ausschnitte wird die Helligkeit des Bildes dynamisch an einen für den betreffenden Ausschnitt bestimmten Mittelwert angepasst. Als Grenzwert für eine dynamische Binarisierung innerhalb des Ausschnittes wird der Median der Grauwerte der Bildpunkte des Ausschnittes herangezogen. Durch eine Normierung der Grauwerte auf den lokal ermittelten Median soll eine zumindest weitgehende Anpassung der Helligkeitsverteilung über das gesamte Bild erreicht werden. Eine anschließende Binarisierung zur Unterteilung der Bildpunkte in 0-1-Werte geht allerdings von dem gesamten Bild aus.

In der DE 41 38 663 A1 ist ein Verfahren zur Segmentierung eines Rasterbildes beschrieben, mit dem eine Unterteilung des Bildes in einzelne Bereiche im Hinblick auf bestimmte zu erreichende Eigenschaften möglich ist. Dieses Segmentierungsverfahren gibt jedoch keinen Hinweis, wie durch eine Anpassung der Grauwerte des Bildes Störanteile eliminiert werden können.

In der EP 0 797 170 A1 ist ein Verfahren zur Registrierung von Fingerabdrücken beschrieben, bei dem ein gerastertes Bild in Blöcke unterteilt wird. Eine Filtervorrichtung ermittelt mittlere Helligkeitswerte in den einzelnen Blöcken, so dass die Binarisierung anhand der Grauwerte jeweils relativ zu der lokalen Helligkeit vorgenommen werden kann. Die weitere Bildverarbeitung sieht eine Binarisierung vor, anhand deren die Ausrichtungen der Strukturlinien bestimmt wird.

Aus der US 6,005,963 war eine Aufteilung eines Fingerabdruckbildes in einzelne Blöcke zur Bewertung der Wiedergabequalität bekannt.

Aufgabe der vorliegenden Erfindung ist es, ein Verfahren zur korrekten und störanteilsfreien Bilderfassung mittels eines elektronischen, insbesondere kapazitiv arbeitenden, Sensors anzugeben, das insbesondere zur Anwendung mit einem Fingerabdrucksensor geeignet ist.

Diese Aufgabe wird mit dem Verfahren mit den Merkmalen des Anspruches 1 gelöst. Ausgestaltungen ergeben sich aus den abhängigen Ansprüchen.

Bei dem erfindungsgemäßen Verfahren wird mit einem elektronischen Sensor ein in Bildpunkte (Pixel) gerastertes Bild erfasst und diejenigen Bildpunkte bestimmt, die Grauwerte aufweisen, die jeweils innerhalb eines lokal begrenzten Bereiches um diesen Bildpunkt maximal bzw. minimal sind oder zumindest über bzw. unter einem jeweils innerhalb eines eng begrenzten Bildbereiches vorgegebenen oder geeignet ermittelten Schwellenwert liegen. Diese Bildpunkte werden als störanteilsfrei aufgefasst und bei einer bevorzugten Ausgestaltung des Verfahrens entsprechend ihren ursprünglichen Grauwerten wiedergegeben. Die übrigen Bildpunkte können mit Grauwerten versehen werden, die bedingt durch die jeweils vorgesehene Anwendung des Verfahrens gewählt werden, so zum Beispiel Grauwerte, die bei einer Bildwiedergabe bei frei betriebenem Sensor entstehen ("Leerbild", z. B. bei einem Fingerabdrucksensor ohne aufgelegten Finger), die aber auch anderweitig vorgegeben werden können. Durch eine lokal adaptive, das heißt an die jeweiligen örtlichen Grauwertverteilungen angepasste Binarisierung der Grauwerte der Bildpunkte können die von Störanteilen weitgehend freien Bildpunkte in jedem Bereich des Bildes sicher erkannt werden.

Das Verfahren wird vorzugsweise ausgeführt, indem das erfasste Bild in Bereiche ("Kacheln") unterteilt wird. In diesen Bereichen wird jeweils ein Schwellenwert des Grauwertes für die Entscheidung festgelegt, nach der einem Bildpunkt mit einem Grauwert oberhalb des Schwellenwertes der Wert "schwarz" oder "1" und mit einem Grauwert unterhalb des Schwellenwertes der Wert "weiß" oder "0" zugewiesen wird. Mit Hilfe einer solchen Binarisierung kann aus dem ursprünglichen Bild ein reines Schwarzweißbild erzeugt werden. Die Unterteilung des Bildes in die Bereiche hat dabei den Zweck, bei der Ermittlung der Positionen der Grauwertextrema eine unterschiedliche durchschnittliche Schwärzung in verschiedenen Bereichen des Bildes berücksichtigen zu können. Es ist hierbei unwesentlich, ob unter einem Grauwertextremum ein besonders schwarzer oder ein besonders weißer Bildpunkt zu verstehen ist, da die Anwendung des Verfahrens im Prinzip in beiden Fällen gleichartig erfolgt. Für die Vereinfachung der nachfolgenden Darstellung wird beispielhaft angenommen, dass diejenigen Bildpunkte die größte Bedeutung besitzen, die den höchsten Schwärzungsgrad aufweisen (maximale Grauwerte).

Bei einem Fingerabdrucksensor z. B. kann so eine örtlich unterschiedliche durchschnittliche Schwärzung des Bildes ausgeglichen werden, die dadurch zustande kommt, dass die Fingerlinien je nach dem auf die Auflagefläche ausgeübten Anpressdruck und/oder der Feuchtigkeit des Fingers unterschiedlich deutlich geschwärzt erscheinen. Hierbei ist angenommen, dass die Stege (ridges) der Hautoberfläche der Fingerbeere als im Wesentlichen ununterbrochene Linien dunkler Bildpunkte erscheinen, während die Furchen (valleys) der Hautoberfläche hell wiedergegeben werden und im ungünstigen Fall infolge einer Verschmutzung der Sensorfläche, auf die die Fingerkuppe aufgelegt wird, mit dunklen Flecken oder dergleichen Störanteilen behaftet sind.

Die Binarisierung wird mehrfach für unterschiedliche Unterteilungen des Bildes durchgeführt. Dabei wird vorzugsweise die Größe der Bereiche, in die das Bild unterteilt wird, variiert. Das erlaubt, Fehler (linienförmige Artefakte) zu reduzieren, die auf Grund der in aneinander angrenzenden Bereichen getrennt vorgenommenen Binarisierungen typischerweise an den Grenzen dieser Bereiche auftreten. Die Bereiche einer bestimmten Unterteilung brauchen nicht untereinander dieselbe Größe zu besitzen. Wichtig ist aber, dass die unterschiedlichen Unterteilungen zu unterschiedlichen Positionen der Grenzlinien zwischen den Bereichen führen, um die dort möglicherweise auftretenden Fehler eliminieren zu können.

In dem beigefügten Flussdiagramm sind die wesentlichen Schritte eines Beispiels des Verfahrens aufgeführt. Ein gerastertes Bild wird in diesem Beispiel zunächst in Bereiche vorgegebener Größe unterteilt. Im Fall eines Rechteckrasters und einer Unterteilung in rechteckige Bereiche besitzen die Bereiche vorzugsweise Seitenlängen von 15 bis 30 Bildpunkten. Für die vorgenommene Unterteilung wird eine adaptive Binarisierung durchgeführt, wobei ein Schwellenwert für die Zuordnung der binären Werte zu den Bildpunkten herangezogen wird. Dieser Schwellenwert kann jeweils vorgegeben sein oder vorzugsweise dynamisch aus den Grauwerten der Bildpunkte des betreffenden Bereiches bestimmt werden.

Zu diesem Zweck können die Grauwerte, die in den Bildpunkten eines Bereiches auftreten, einschließlich der Häufigkeit erfasst und statistisch ausgewertet werden. Im einfachsten Fall wird ein Mittelwert der Grauwerte bestimmt und dieser Mittelwert als Schwellenwert verwendet. Es kann aber auch ein Histogramm der Grauwerte aufgestellt werden, indem die Grauwertskala in disjunkte Intervalle eingeteilt wird und zu jedem Intervall die Anzahl der in dem Bereich vorhandenen Bildpunkte mit einem Grauwert in dem betreffenden Intervall festgestellt wird. Aus diesem Histogramm kann dann der Schwellenwert bestimmt werden, wobei das Vorgehen hierbei auf den jeweiligen Anwendungsfall abgestimmt werden kann. Die Wahl einer geeigneten Methode (Algorithmus) zur Auswertung des Histogramms ist nicht festgelegt und kann nach der Qualität der damit erreichten praktischen Ergebnisse erfolgen.

Nachdem eine Binarisierung durchgeführt wurde, wobei die besagten Schwellenwerte bei der Zuordnung der binären Werte für jeden Bereich der Unterteilung gesondert herangezogen wurden, wird eine andere Unterteilung des Bildes vorgenommen. Bei der bevorzugten Ausgestaltung des Verfahrens wird die Größe der Bereiche und damit die Auflösung der adaptiven Binarisierung variiert.

Die für mehrere unterschiedliche Unterteilungen des Bildes vorgenommenen Binarisierungen werden dann zu einer einzigen Binarisierung verarbeitet. Das geschieht am besten, indem die einzelnen Binarisierungen additiv überlagert werden. Das Ergebnis dieser Überlagerung kann vorzugsweise noch mit einer logischen UND-Verknüpfung mit dem Ergebnis einer globalen Binarisierung verbunden werden. Die globale Binarisierung geschieht ohne Unterteilung des Bildes auf Grund eines für alle Bildpunkte geltenden gemeinsamen, nämlich globalen Schwellenwertes, der beispielsweise aus dem Histogramm aller Grauwertanteile abgeleitet werden kann. Die Überlagerungen erfolgen jeweils in der Weise, dass bildpunktweise die zugeordneten binären Werte mit UND logisch verknüpft werden, so dass nur dort ein binärer Wert "1" stehen bleibt, wo die verknüpften Werte ebenfalls "1" waren.

Vor diesen Verarbeitungsschritten kann noch zusätzlich denjenigen Bildpunkten, die den Wert "1" isoliert aufweisen, das heißt, die umgeben sind von Bildpunkten mit dem Wert "0", der Wert "0" zugewiesen werden. Das geschieht zum Beispiel durch an sich bekannte Methoden der morphologischen Bildverarbeitung unter Verwendung eines Wertemusters, in dem eine Anordnung von Bildpunkten mit zugewiesenen Werten wiedergegeben ist. Ein solches Wertemuster (Template) ist in diesem Fall ein Bildpunkt mit dem Wert "1", der umgeben ist von Bildpunkten mit dem Wert "0" ("Spur"-Template). Bildausschnitte werden auf Übereinstimmung mit diesem Wertemuster verglichen ("hit-miss-transformation"). So können insbesondere einzelne schwarze Pixel aus einem Bild entfernt werden.

Das Ergebnis der additiven Überlagerung der bei der jeweiligen Ausgestaltung des Verfahrens vorgenommenen Binarisierungen dient anschließend als Maske zur Registrierung und Lokalisierung der ausgezeichneten Bildpunkte, die als störanteilsfrei ausgewiesen werden. Diese Maske kann bereits das Endergebnis des Verfahrens darstellen, wenn es nur darum geht, diesen Anteil des Bildes zu bestimmen. Bei einem Fingerabdruckbild können die Fingerlinien durch die Maske bereits soweit bestimmt sein, dass eine Person damit identifiziert werden kann, indem zum Beispiel die für die Identifizierung wesentlichen Bildpunkte (so genannte Minutien, insbesondere Verzweigungspunkte der Stege und Furchen) extrahiert werden.

In einer weiterführenden Ausgestaltung des Verfahrens kann das Originalbild anhand der erstellten Maske zu einer optimierten Version verarbeitet werden. Dazu wird an denjenigen Bildpunkten, an denen die Maske einen Wert "1" aufweist, der ursprüngliche Grauwert, d. h. der Grauwert des Originalbildes eingesetzt. Die übrigen Bildpunkte erhalten zunächst den Grauwert null. Das entspricht einer Multiplikation der Grauwerte der Bildpunkte des Originalbildes mit den zugehörigen Werten der Maske, hier nicht als logische Werte, sondern als reelle Zahlen aufgefasst.

Um eine vollständige Wiedergabe des Bildes im Wertebereich der Grauabstufungen des Originalbildes zu erhalten, können noch diejenigen Bildpunkte, denen in der Maske der Wert "0" zugewiesen ist, einen Grauwert zugewiesen bekommen. Dafür kann ein Grauwert gewählt werden, den der Sensor, mit dem das Bild erfasst wird, an der betreffenden Stelle liefert, wenn er leer betrieben wird (zum Beispiel ohne aufliegenden Finger). Diese Hintergrundpixel besitzen dann in etwa die Grauwerte, die bei einem störanteilsfreien Betrieb des Sensors erhalten worden wären. Diese Grauwerte, im Idealfall nur ein bestimmter Grauwert, können empirisch geschätzt werden oder aus einem vor der Aufnahme des Originalbildes aufgenommenen Leerbild errechnet oder abgespeichert und direkt übernommen werden.

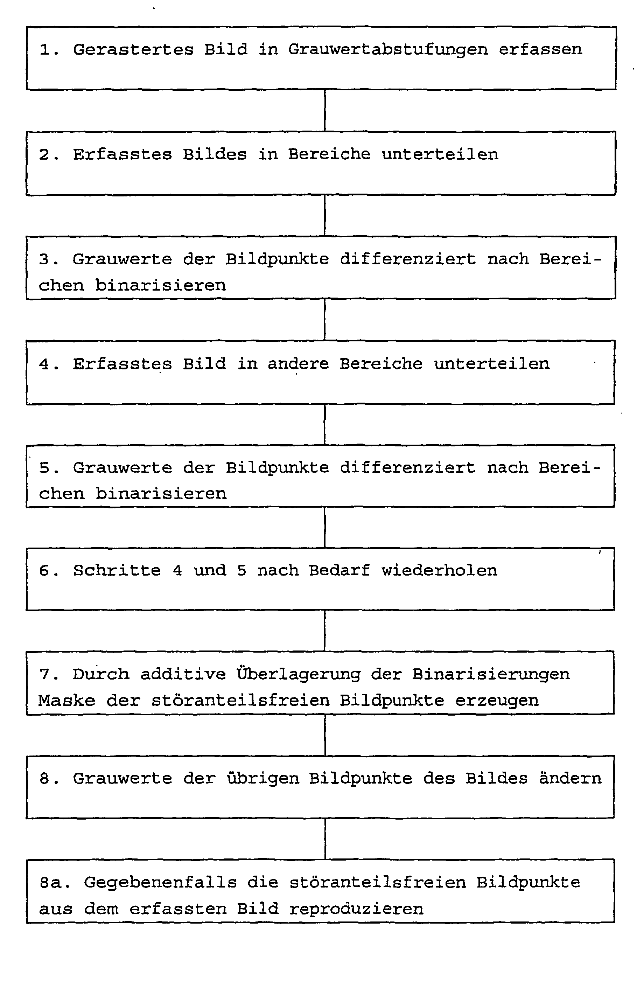

## Patentansprüche

1. Verfahren zur Optimierung eines elektronisch erzeugten Bildes, bei dem
mit einem elektronischen Sensor ein in Bildpunkte gerastertes Bild erfasst wird,
das erfasste Bild wiederholt in Bereiche unterteilt wird, wobei unterschiedliche Unterteilungen vorgenommen werden,
in den Bereichen jeweils ein Schwellenwert des Grauwertes für eine Entscheidung festgelegt wird, nach der einem Bildpunkt mit einem Grauwert oberhalb des Schwellenwertes der Wert "schwarz" oder "1" und mit einem Grauwert unterhalb des Schwellenwertes der Wert "weiß" oder "0" zugewiesen wird,
die Bildpunkte mit einem Grauwert oberhalb des jeweiligen Schwellenwertes zu jeder Unterteilung registriert werden und aus den Werten, die den Bildpunkten für jede Unterteilung zugewiesen wurden, durch eine logisch additive Überlagerung ausgezeichnete Bildpunkte bestimmt werden und
die Grauwerte der übrigen Bildpunkte geändert werden.

2. Verfahren nach Anspruch 1, bei dem
die ausgezeichneten Bildpunkte entsprechend ihren ursprünglichen Grauwerten wiedergegeben werden.

3. Verfahren nach Anspruch 1 oder 2, bei dem
die Grauwerte der übrigen Bildpunkte so geändert werden, dass sie Bildpunkten in einem leeren Betrieb des Sensors entsprechen.

4. Verfahren nach einem der Ansprüche 1 bis 3, bei dem
in die logisch additive Überlagerung Werte einbezogen werden, die den Bildpunkten auf Grund einer ohne Unterteilung in Bereiche vorgenommenen globalen Binarisierung der Grauwerte zugewiesen werden.

5. Verfahren nach einem der Ansprüche 1 bis 4, bei dem
die Grauwerte in disjunkte Intervalle eingeteilt werden,
zu diesen Intervallen die Anzahlen der in einem jeweiligen Bereich vorhandenen Bildpunkte bestimmt werden, deren Grauwerte in einem jeweiligen Intervall liegen, und die Schwellenwerte aus diesen Anzahlen bestimmt werden.

6. Verfahren nach einem der Ansprüche 1 bis 5, bei dem
ein Fingerabdruckbild erfasst wird und störanteilsfreie Anteile von Fingerlinien als die ausgezeichneten Bildpunkte bestimmt werden.

7. Verfahren nach Anspruch 6, bei dem
Störanteile, die auf einen nicht einwandfreien Zustand einer Auflagefläche des Sensors zurückzuführen sind, aus den übrigen Bildpunkten eliminiert werden.

## Claims

1. Method for optimizing an electronically generated image, in which
an image which is rasterized into pixels is acquired by means of an electronic sensor,
the acquired image is repeatedly subdivided into regions, in which case different subdivisions are performed,
in the regions a respective threshold value of the grey-scale value is defined for a decision according to which a pixel with a grey-scale value above the threshold value is allocated the value "black" or "1" and a pixel with a grey-scale value below the threshold value is allocated the value "white" or "0",
the pixels with a grey-scale value above the respective threshold value are registered for each subdivision and, from the values which were allocated to the pixels for each subdivision, excellent pixels are determined by a logically additive superposition and
the grey-scale values of the remaining pixels are changed.

2. Method according to Claim 1, in which
the excellent pixels are reproduced in accordance with their original grey-scale values.

3. Method according to Claim 1 or 2,
in which
the grey-scale values of the remaining pixels are changed in such a way that they correspond to pixels in a dummy mode of the sensor.

4. Method according to one of Claims 1 to 3, in which values are included in the logically additive superposition which are allocated to the pixels on the basis of a global binarization of the grey-scale values which is performed without subdivision into regions.

5. Method according to one of Claims 1 to 4, in which the grey-scale values are classified into disjoint intervals, the numbers of pixels which are present in a respective region and whose grey-scale values lie in a respective interval are determined for these intervals, and the threshold values are determined from these numbers.

6. Method according to one of Claims 1 to 5,
in which
a fingerprint image is acquired and disturbance-component-free components of finger lines are determined as the excellent pixels.

7. Method according to Claim 6,
in which
disturbance components which are attributable to a not entirely satisfactory state of a bearing area of the sensor are eliminated from the remaining pixels.

## Revendications

1. Procédé permettant d'optimiser une image produite électroniquement, dans lequel
on détecte par un détecteur une image tramée en points images,
on subdivise l'image détectée de manière répétée en zones, en effectuant des subdivisions différentes, on détermine dans les zones respectivement une valeur de seuil de la valeur de gris pour décider s'il est attribué à un point image ayant une valeur de gris supérieure à la valeur de seuil, la valeur « noir » ou « 1 » ou ayant une valeur de gris inférieure à la valeur de seuil, la valeur « blanc » ou « 0 », on enregistre les points images ayant une valeur de gris au-dessus de la valeur de seuil respective pour chaque subdivision et, à partir des valeurs qui ont été attribuées aux points images pour chaque subdivision, on détermine par une superposition additive du point de vue logique des points image bons et on modifie les valeurs de gris des autres points images.

2. Procédé suivant la revendication 1, dans lequel on reproduit les bons points images conformément à leur valeur de gris d'origine.

3. Procédé suivant la revendication 1 ou 2, dans lequel on modifie les valeurs de gris des autres points images de façon à ce qu'ils correspondent à des points images dans un fonctionnement à vide du détecteur.

4. Procédé suivant l'une des revendications 1 à 3, dans lequel on incorpore dans la superposition additive du point de vue logique des valeurs qui sont attribuées aux points images sur la base d'une binarisation globale des valeurs de gris effectuées sans subdivision en zones.

5. Procédé suivant l'une des revendications 1 à 4, dans lequel on classe les valeurs de gris en des intervalles disjonctifs, on détermine, pour ces intervalles, le nombre des points images présents dans une zone respective dont les valeurs de gris se trouvent dans un intervalle respectif et on détermine les valeurs de seuil à partir de ces nombres.

6. Procédé suivant l'une des revendications 1 à 5, dans lequel on détecte une image d'empreinte digitale et on définit, comme étant de bons points images, des parties de lignes du doigt, qui sont exemptes de perturbations.

7. Procédé suivant la revendication 6, dans lequel on élimine, des autres points images, des parties perturbées qui sont dues à un état qui n'est pas impeccable d'une surface d'appui du détecteur.
